**Europäisches Patentamt**

**European Patent Office**

**Office européen des brevets**

(11) Veröffentlichungsnummer: **0 174 514**

**A2**

## EUROPÄISCHE PATENTANMELDUNG

(21) Anmeldenummer: **85110185.7**

(22) Anmeldetag: **14.08.85**

(51) Int. Cl.⁴: **G 01 P 13/02**

(30) Priorität: **08.09.84 DE 3433084**

(43) Veröffentlichungstag der Anmeldung:
**19.03.86 Patentblatt 86/12**

(84) Benannte Vertragsstaaten:
**AT BE CH DE FR GB IT LI NL SE**

(71) Anmelder: **Battelle-Institut e.V.**
**Am Römerhof 35 Postfach 900 160**
**D-6000 Frankfurt/Main 90(DE)**

(72) Erfinder: **Steininger, Helmut, Dr.**
**Schumannstrasse 12**
**D-6392 Neu-Anspach(DE)**

(72) Erfinder: **Wevelsiep, Klaus, Dr.**
**Fuchstanzstrasse 11**
**D-6239 Kriftel(DE)**

(72) Erfinder: **Selders, Matthias, Dr.**
**Liviushof**
**D-6233 Kelkheim(DE)**

(72) Erfinder: **Sdunzig, Horst-Dieter**
**Neugasse 10**
**D-6203 Hochheim(DE)**

(74) Vertreter: **Rupprecht, Klaus, Dipl.-Ing.**
**Am Römerhof 35**
**D-6000 Frankfurt (Main) 90(DE)**

(54) Vorrichtung zur Bestimmung der Strömungsrichtung von flüssigen oder gasförmigen Medien.

(57) Zur Bestimmung der Strömungsrichtung von flüssigen oder gasförmigen Medien wird auf einem isolierenden und im wesentlichen homogen heizbaren Substrat mindestens ein Paar gegenüberliegend angeordneter NTC-Widerstände vorgesehen. Aus der durch die Strömung hervorgerufen Widerstandsänderung der gegenüberliegenden NTC-Widerstände, denen jeweils eine bestimmte Richtung zugeordnet ist, ist die Richtung der Strömung elektronisch feststellbar. Vorzugsweise bilden mehrere Paare ein regelmäßiges Polygon mit gerader Kantenzahl oder sie sind teilkreisförmig ausgebildet, so daß eine kreisförmige Anordnung entsteht. Die Wärmequelle befindet sich im Zentrum des Polygons oder des Kreises oder ist kreisförmig ausgebildet und konzentrisch zu den NTC-Widerständen angeordnet.

0174514

Beschreibung:

Die Erfindung betrifft eine Vorrichtung zur Bestimmung der Strömungsrichtung von flüssigen oder gasförmigen Medien.

Zur Messung der Strömungsgeschwindigkeit von Gasen und Flüssigkeiten sind mehrere, auf verschiedenen physikalischen Prinzipien basierende Verfahren und Vorrichtungen bekannt. Seit langem eingesetzt sind Meßeinrichtungen, deren Funktion auf mechanisch erfassbaren Strömungseffekten beruht und die meistens die von der Strömung auf ein bewegliches Teil übertragenen Kräfte ausnützen. Genauere Ergebnisse liefern Strömungsmesser mit Ultraschall-Meßsonden, bei denen die Schallausbreitung strömungsaufwärts und -abwärts bestimmt und ausgewertet wird. Die Strömungsgeschwindigkeit von Gasen kann auch über eine Druckdifferenzmessung an zwei verschiedenen Stellen mit unterschiedlichem Durchmesser erfolgen. Einen großen Anteil innerhalb der Durchflußsonden machen die thermischen Durchflußsensoren aus. Hier ist zu unterscheiden zwischen Sensoren, die aus der Kombination von Wärmequelle und davon getrenntem Wärmedetektor bestehen und solchen, die nur eine Wärmequelle enthalten, wobei die Wärmeabgabe an das strömende Medium beurteilt wird.

Thermische Durchflußsensoren, die eine Wärmequelle und einen Wärmedetektor enthalten, sind in verschiedensten Techniken, z. B. Silizium-, Dünnschicht- und Dickschicht--Technik realisiert worden. All diese Anordnungen eignen sich jedoch nur zur Messung gerichteter, d. h. eindimensionaler Strömungen. Entsprechende Vorrichtungen zur Erfassung und Ermittlung von Strömungen veränderlicher Richtung sind nicht bekannt.

Der Erfindung liegt die Aufgabe zugrunde, die Bestimmung der Strömungsrichtung ohne großen Aufwand zu ermöglichen. Die Realisierung eines solchen Strömungssensors sollte in einer Technik erfolgen, die eine kostengünstige Produktion und eine direkte Integration des Sensors und der nachgeschalteten, auswertenden Elektronik zuläßt. Ferner sollte sich an die Richtungsbestimmung eine Messung der Strömungsgeschwindigkeit anschließen können.

Diese Aufgabe ist erfindungsgemäß dadurch gelöst, daß auf einem isolierenden und heizbaren Substrat mindestens ein Paar gegenüberliegend angeordnete NTC-Widerstände vorgesehen ist und daß aus der durch die Strömung hervorgerufenen Widerstandsänderung der NTC-Widerstände, denen jeweils eine bestimmte Richtung zugeordnet ist, die Richtung der Strömung elektronisch feststellbar ist. Die Unteransprüche 2 bis 10 betreffen bevorzugte Ausführungsformen der erfindungsgemäßen Vorrichtung.

Der Strömungssensor nach der Erfindung wird vorzugsweise in Dickschicht-/Hybridtechnologie ausgeführt, die in der Elektronikfertigung zwar einen festen Platz einnimmt, für Sensoren bisher aber nur wenig eingesetzt wurde. Hierbei wird eine, z.B. 0,5 bis 1,0 mm dicke Platte aus einem elektrisch isolierenden Material in an sich bekannter Weise mit NTC-Widerständen und einer Wärmequelle versehen. Als Substrat sind unter anderem Aluminiumoxid, emaillierter Stahl, Glas, Silizium- und Aluminiumnitrid geeignet. Die Widerstände werden mit einer Auswertelektronik verbunden, die im wesentlichen aus einem Mikroprozessor mit automatischer Datenausgabe besteht.

0174514

Die Anordnung der NTC-Widerstände sowie die Funktionsweise der erfindungsgemäßen Vorrichtung, sind in der
schematischen Zeichnung erläutert.

Auf einem Substrat 1 werden n NTC-Widerstände 2,2;
3,3'...usw. kreissymetrisch angeordnet, wobei n = 2,4
... und jede beliebige gerade Zahl sein kann. Dieses
Beispiel zeigt einen mit acht Widerständen realisierten
Sensor. Jedem NTC-Widerstand 2 liegt daher ein anderer 2'
gegenüber, so daß diese ein Paar bilden. Im Mittelpunkt
der Anordnung befindet sich eine punktförmige Wärmequelle
4, z.B. ein geheizter Dickschicht-Widerstand. Diese wirkt
auf die sie kreisförmig umgebenden NTC-Widerstände
2,2',3,3'...usw. und sorgt für eine homogene Erwärmung
des Substrates 1 und damit der Widerstände 2,2',3,
3'...usw. Die Widerstände 2,2',3,3'...usw., werden über
Anschlußstellen 5 mit einem - hier nicht gezeigten -
Mikroprozessor verbunden.

Je nach Strömungsrichtung werden diametrale Widerstände
2,2',3,3'...usw. gegenüber dem Ruhezustand gekühlt bzw.
zusätzlich erwärmt. Erfolgt die Strömung z. B. in der
Pfeilrichtung, so wird durch Wärmetransport der Widerstand 2 gekühlt, während der diesem gegenüberliegende
Widerstand 2' erwärmt wird. Derselbe Effekt tritt auch
bei den übrigen Widerständen auf, jedoch in wesentlich
geringerer Intensität. Dadurch können Widerstands- bzw.
Temperaturänderungen erfaßt werden, die der nachfolgenden
Auswertung zugrunde liegen.

Im Mikroprozessor sind die Richtungswerte, die jedem
NTC-Widerstand bezüglich eines willkürlich festgesetzten
Nullpunkts zugeordnet sind, gespeichert. Durch Anwendung
von Interpolationstechniken wird die Richtung bestimmt.

Stützstellen für die Interpolation sind die aus den Widerstandswerten der NTC-Elemente berechneten Temperaturen. Die Lage des Maximums der Interpolationskurve gibt die Richtung der Strömung in diesem Beispiel mit einer Genauigkeit von $\mp$ 7°C wieder. Ohne die Anwendung von Interpolationen würde die Auflösung $\mp$ 23° C betragen. Eine wesentlich höhere Auflösung läßt sich durch Verwendung von mehr als acht NTC-Elementen erreichen.

Mit einer solchen Anordnung können lediglich zwei dimensionale Strömungen erfaßt werden. Will man auch Strömungen bestimmen, die z. B. von der Rückseite der Anordnung auftreffen, so ist es zweckmäßig, zwei mit NTC-Widerständen versehene Substrate rückseitig miteinander zu verbinden und zwischen beiden Substraten eine wärmeisolierende Zwischenschicht anzubringen.

Es ist auch denkbar, daß die NTC-Widerstände nicht kreissymmetrisch sondern in Form eines Polygons angeordnet sind. Ebenfalls können mehrere Kreise oder Polygone in bezug auf die zentrale Wärmequelle konzentrisch aufgebracht werden. Die Wärmequelle kann z.B. auch kreisförmig ausgebildet und konzentrisch zu den NTC-Widerständen angeordnet sein.

Will man gleichzeitig mit der Ermittlung der Strömungsrichtung auch die Geschwindigkeit der Strömung bestimmen, so muß ein separater Temperatursensor zur Aufnahme der Umgebungstemperatur vorgesehen sein.

BATTELLE - INSTITUT E.V., Frankfurt am Main

========================================================

Vorrichtung zur Bestimmung der Strömungsrichtung
von flüssigen oder gasförmigen Medien

========================================================

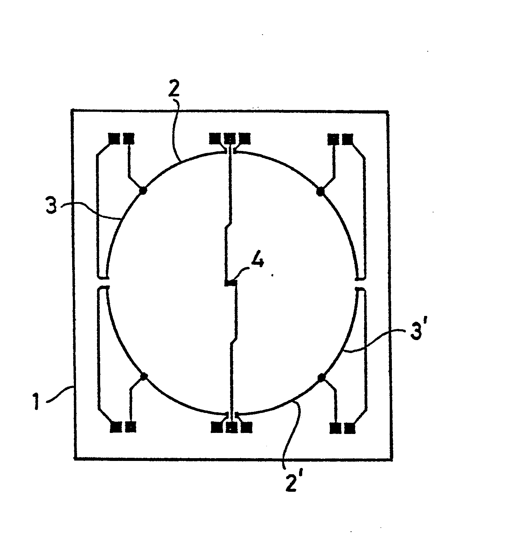

Patentansprüche

1. Vorrichtung zur Bestimmung der Strömungsrichtung von
flüssigen oder gasförmigen Medien, dadurch gekennzeichnet, daß auf einem isolierenden und heizbaren
Substrat (1) mindestens ein Paar gegenüberliegend
angeordneter NTC-Widerstände (2,2',3,3') vorgesehen
ist und daß aus der durch die Strömung hervorgerufenen
Widerstandsänderung der NTC-Widerstände (2,2',3,3'),
denen jeweils eine bestimmte Richtung zugeordnet ist,
die Richtung der Strömung elektronisch feststellbar
ist.

2. Vorrichtung nach Anspruch 1, dadurch gekennzeichnet,
daß mehrere Paare NTC-Widerstände (2,2',3,3') ein
regel-

- 2 -

0174514

mäßiges Polygon mit gerader Kantenzahl ergeben.

3. Vorrichtung nach Anspruch 2, dadurch gekennzeichnet, daß einzelne NTC-Widerstände (2,2',3,3') teilkreisförmig ausgebildet sind, so daß sie eine kreisförmige Anordnung ergeben.

4. Vorrichtung nach einem der Ansprüche 1 bis 3, dadurch gekennzeichnet, daß auf dem Substrat mindestens eine Wärmequelle (4) in jeweils gleichem Abstand von den NTC-Widerständen (2,2',3,3') angeordnet ist

5. Vorrichtung nach Anspruch 4, dadurch gekennzeichnet, daß eine punktförmige, zentrale wärmequelle (4) oder eine kreisförmige, die NTC-Widerstände (2,2',3,3') konzentrisch umgebende Wärmequelle vorgesehen ist.

6. Vorrichtung nach einem der Ansprüche 1 bis 5, dadurch gekennzeichnet, daß vier bis achtzehn Paar NTC-Widerstände (2,2',3,3') vorgesehen sind.

7. Vorrichtung nach einem der Ansprüche 1 bis 6, dadurch gekennzeichnet, daß mehrere Polygone oder Kreise von NTC-Widerständen (2,2',3,3') konzentrisch angeordnet sind.

8. Vorrichtung nach einem der Ansprüche 1 bis 7, dadurch gekennzeichnet, daß zwei Substrate (1) mit NTC-Widerständen (2,2',3,3') rückseitig über eine wärmeisolierende Zwischenschicht miteinander verbunden sind.

9. Vorrichtung nach einem der Ansprüche 1 bis 8, dadurch gekennzeichnet, daß sie in Dickschichttechnik ausgeführt ist.

10. Vorrichtung nach einem der Ansprüche 1 bis 9, <u>dadurch</u>
<u>gekennzeichnet,</u> daß zur Bestimmung der Strömungsge-
schwindigkeit ein separater Temperatursensor für die
Aufnahme der Umgebungstemperatur vorgesehen ist.